Europäisches Patentamt

European Patent Office

Office européen des brevets

(11) Publication number: **0 141 751**
**B1**

(12) **EUROPEAN PATENT SPECIFICATION**

(45) Date of publication of patent specification: **05.07.89**

(51) Int. Cl.⁴: **G 01 N 23/08,** G 01 N 23/16

(21) Application number: **84402212.9**

(22) Date of filing: **05.11.84**

(54) Process for determining the basis weight of a low atomic number material in a mixture with a higher atomic number material.

(30) Priority: **07.11.83 US 549026**

(43) Date of publication of application:
**15.05.85 Bulletin 85/20**

(45) Publication of the grant of the patent:
**05.07.89 Bulletin 89/27**

(84) Designated Contracting States:
**DE FR GB IT NL SE**

(56) References cited:
**US-A-3 092 724**
**US-A-3 452 192**
**US-A-3 889 121**

(73) Proprietor: **MEASUREX CORPORATION**
**One Results Way**
**Cupertino, California 95014 (US)**

(72) Inventor: **Hegland, Philip M.**
**1147 Lockhaven Way**
**San Jose California 95129 (US)**
Inventor: **Dahlquist, John**
**3321 Kenneth Dr.**
**Palo Alto California 94303 (US)**

(74) Representative: **Mongrédien, André et al**
**c/o SOCIETE DE PROTECTION DES INVENTIONS**
**25, rue de Ponthieu**
**F-75008 Paris (FR)**

Courier Press, Leamington Spa, England.

## Description

### Background of the invention

### The field of the invention

The present invention relates to apparatus for measuring the concentration of binder material in fiberglass.

### Description of the prior art

Fiberglass insulation contains glass fibers which are mixed with binder material. The binder material is generally composed of hydrocarbon compounds in a water suspension, and the purpose of the binder when dry is to hold the glass fibers together.

In practice, it is often desirable to be able to determine the percentage of binder material in fiberglass. One technique for making such a determination is taught in U.S. Patent 4,363,968 titled "Method and Apparatus for Determining the Binder Content in a Fibrous Mat". The patent teaches a system including an infrared source located to one side of the fiberglass mat for generating infrared radiation having two wave lengths. A detector is located opposite the source on the other side of the mat to receive the portions of the infrared signals which are transmitted through the mat. Based upon the strengths of the signals received by the detectors, the system determines the concentration of binder in the mat.

We have found that systems of the type taught in the patent identified above are limited in their usefulness by the extent to which infrared radiation can penetrate fiberglass. It is sometimes desirable to be able to measure fiberglass or other materials which have a basis weight so great that the binder can not be measured by infrared means. Also, as fiberglass is cured, the chemical properties of the binder can change thereby affecting measurements by infrared-type systems. However, it is desirable to be able to measure the concentration of binder without errors due to the degree of cure.

### Brief description of the drawings

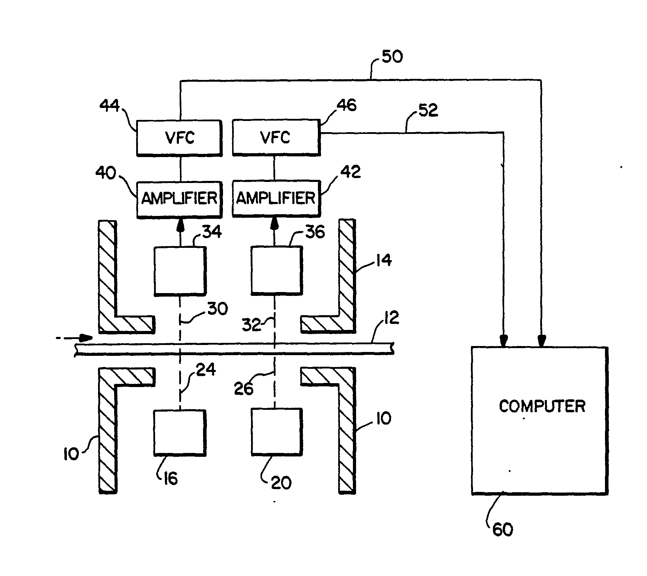

Figure 1 is a schematic illustration of the preferred embodiment of the present invention shown in partial cross section.

### Objects of the invention

An object of the present invention is to provide a system and process for determining the concentration of binder in fiberglass without the introduction of errors due to the degree of cure.

Another object of the present invention is to provide a system and process as in US—A—3889121 for measuring a first material in a second material which has a relatively high basis weight.

Further objects and advantages of the invention can be ascertained by reference to the specification and drawings herein which are by way of example only and not in limitation of the invention which is defined by the claims and equivalents thereto.

### Detailed description of the preferred embodiment

With reference to the figure, the preferred embodiment includes a source housing 10 located to one side of a moving sheet of fiberglass 12. A detector housing 14 is located at the side of the sheet 12 opposite the source housing 10, and both housings 10 and 14 are constructed and arranged to be movable in synchronized fashion across the sheet 12 so that measurements can be made across the sheet. Conventional scanning systems are available to move the housings 10 and 14.

The source housing 10 contains a 30 Kilo Volt, tungsten target Bremstralung x-ray source 16 and a gamma ray source 20. The x-ray source 16 generates a beam of x-rays 24, which are absorbed primarily by the silicon (which has a high atomic number relative to the binder) in the fiberglass. The gamma ray source 20 generates a beam of gamma rays 26, having an energy of 59.8 thousand electron volts (KeV) which are absorbed by the silicon in the fiberglass and the binder, which is composed primarily of hydrocarbons having low atomic numbers relative to silicon. For example, the binder can include latex and ureaformaldehyde. The portion of the x-ray beam 24 which passes through the sheet 12 is designated as beam 30, and the portion of the gamma ray beam 26 which passes through the sheet 12 is designated as 32.

The detector housing 14 contains an x-ray detector 34 which is mounted to receive the beam 30, and a gamma ray detector 36 mounted to receive the beam 32. In practice, the detector 34 can be a xenon-filled ion chamber so that x-rays received by the detector generate a small current in the ion chamber. The detector 36, in practice, can also be xenon-filled. The voltage from the detectors 34 and 36 are proportional to the strengths of the beams 30 and 32 received by the detectors. The detectors 34 and 36 are electrically coupled to amplifiers 40 and 42 which generate analog-type electrical signals proportional to the signals from the detectors. The amplifiers 40 and 42 are electrically coupled to voltage-to-frequency converters 44 and 46 which convert the analog signals from the amplifiers into digital signals to be transmitted over lines 50 and 52 to a computer 60.

In operation, the system is calibrated before it is utilized to measure binder and fiberglass. The calibration procedure includes operating the system in the absence of the sheet 12 to determine the strengths of the beams 24 and 26 received by the detectors in the absence of the sheet. The signal from the first detector 34 is designated $I_{x0}$ and the signal from the second detector 36 is designated as $I_{y0}$.

Thereafter, material is placed in the beams 24 and 26 to insure that the beams do not reach the detectors. The resulting signals from the detector are thus due to background radiation and electronic offset. The background signals are designated as $I_{B1}$ and $I_{B2}$, respectively.

Based on these values, the following equalities can be established where $I_1$ and $I_2$ are the signals

from the first and second detectors when the sheet is placed in the beam:

$$R_1 = \frac{I_1 - I_{B1}}{I_{X0} - I_{B1}}$$

$$R_2 = \frac{I_2 - I_{B2}}{I_{Y0} - I_{B2}}$$

Thereafter, a plurality of samples of fiberglass having different concentrations of binder are analyzed. This data is utilized in a conventional curve-fitting computer program to determine the coefficients, A, B, C and D in the following equation:

$$W_B = A + B\, f(R_1) + Cg(R_2) + Dh(R_1, R_2).$$

Where $W_B$ equals the binder basis weight, and A, B, C and D are constants determined by the fitting of the data. The terms f and g are functions of $R_1$ and $R_2$ respectively and h is a function of $R_1$ and $R_2$. The functions f, g and h are chosen according to the particular material being studied. In practice we have found that for fiberglass the functions f and g can be the natural logarithm and h is zero, so that the formula is:

$$WB = A + B \ln(R_1) + C\ln(R_2).$$

After the constants A, B, C and D have been determined, the system can be operated to measure a continuous sheet of fiberglass moving horizontally as indicated in Figure 1. The computer continuously receives data from the detectors via lines 50 and 52 and determines the basis weight of the binder based on the equations above.

In practice, we have found that the embodiment described herein is effective for measuring the weight of binder in fiberglass wherein the basis weight of the fiberglass and binder is greater than about 1000 grams per square meter up to about 12,000 grams per square meter.

In one test of a fiberglass sheet having a weight of about 5,000 grams per square meter, we have found the constants to be as follows:

$A = -400$ g/m$^2$
$B = 3,000$ g/m$^2$
$C = -35,000$ g/m$^2$
$D = 0$.

The present invention is applicable not only to measurement of binder in fiberglass but more generally to measurement of a low atomic number material, comprising one or more compounds, mixed with a higher atomic number material, comprising one or more compounds. An example is the measurement of water (which contains relatively low atomic number hydrogen and oxygen) in a mineral base (having relatively high atomic number constituents) as is sometimes used for ceiling tile. In the case of fiberglass, as another example, the x-ray beam is attenuated by the high atomic number silicon in the fiberglass, and the gamma ray beam is attenuated by the relatively low atomic number binder as well as by the silicon. We have used our system to measure fiberglass having a binder of phenol and urea-formaldehyde, as an example.

It should be understood that it is not necessary that one beam be x-ray and the other gamma ray, but in fact both beams can be either x-ray or gamma ray. However, it is necessary that one beam be of higher energy than the other. In the practice of this invention x-rays and gamma rays have very similar properties. Therefore, the terms "x-ray" and "gamma ray" are used interchangeably and "x-ray" means either "x-ray" or "gamma ray".

## Claims

1. A process for determining the concentration of a binder in the fiberglass, the binder constituting a low atomic number first material and the fiberglass constituting a higher atomic number second material, the process comprising:

a) directing a first beam of x-rays and a second beam of x-rays having a higher energy than the first beam into the mixture;

b) measuring the respective intensities $I_1$ and $I_2$ of the detector signals resulting from the transmission of the first and second beams through the mixture;

c) measuring the respective intensities $I_{X0}$ and $I_{Y0}$ of the detector signals in the absence of the mixture;

d) measuring the respective intensities $I_{B1}$ and $I_{B2}$ of the background signals of the detectors;

e) determining the basis weight $W_B$ of the low atomic number material, from the values of the intensities measured, characterized in that the basis weight $W_B$ is determined from the formula

$$W_B = A + B\, l_n(R_1) + Cl_n(R_2)$$

wherein: A, B and C are constants

$$R_1 = \frac{I_1 - I_{B1}}{I_{X0} - I_{B1}}$$

$$R_2 = \frac{I_2 - I_{B2}}{I_{Y0} - I_{B2}}$$

2. A process according to claim 1 wherein the first material consists of one compound.

3. A process according to claim 1 wherein the first material is a plurality of compounds.

4. A process according to claim 3 wherein the first material is a mixture of phenol and ureaformaldehyde.

5. A process according to claim 4 wherein the first beam is a beam of x-rays and the second beam is a beam of gamma rays.

**Patentansprüche**

1. Verfahren zur Bestimmung der Konzentration eines Bindemittels in einer Glasfaser, wobei das Bindemittel ein erstes Material mit niedriger Atomzahl darstellt und die Glasfaser ein zweites Material mit höherer Atomzahl darstellt, bei dem
a) ein erster Röntgenstrahl und ein zweiter Röntgenstrahl mit einer höheren Energie als der erste Strahl in die Mischung geleitet wird,
b) die jeweiligen Intensitäten $I_1$ und $I_2$ der Detektorsignale, die sich aus der Transmission der ersten und zweiten Strahlen durch die Mischung ergeben, gemessen werden,
c) die jeweiligen Intensitäten $I_{x0}$ und $I_{y0}$ der Detektorsignal ein Abwesenheit der Mischung gemessen werden,
d) die jeweiligen Intensitäten $I_{B1}$ und $I_{B2}$ der Untergrundsignale der Detektoren gemessen werden,
e) das Basisgewicht $W_B$ des Materials mit niedriger Atomzahl aus den Werten der gemessenen Intensitäten bestimmt wird, dadurch gekennzeichnet, daß das Basisgewicht $W_B$ aus der Formel

$$W_B = A + B \; I_n(R_1) + CI_n(R_2)$$

bestimmt wird, worin A, B und C Konstanten sind und

$$R_1 = \frac{I_1 - I_{B1}}{I_{x0} - I_{B1}}$$

$$R_2 = \frac{I_2 - I_{B2}}{I_{y0} - I_{B2}}$$

2. Verfahren nach Anspruch 1, worin das erste Material aus einer Verbindung besteht.
3. Verfahren nach Anspruch 1, worin das erste Material eine Vielzahl von Verbindungen ist.
4. Verfahren nach Anspruch 3, worin das erste Material eine Mischung aus Phenol und Harnstoff-Formaldehyd ist.
5. Verfahren nach Anspruch 4, worin der erste Strahl ein Röntgenstrahl und der zweite Strahl ein Strahl aus Gammastrahlen ist.

**Revendications**

1. Procédé pour déterminer la concentration en liant dans un verre fibreux, le liant constituant une première matière de faible nombre atomique et le verre fibreux constituant une deuxième matière de nombre atomique plus élevé, le procédé consistant à:
a) diriger un premier faisceau de rayons X et un deuxième faisceau de rayons X ayant une énergie supérieure à celle du premier faisceau dans le mélande;
b) mesurer les intensités respectives $I_1$ et $I_2$ des signaux de détecteurs résultant de la transmission des premier et deuxième faisceaux dans le mélange;
c) mesurer les intensités respectives $I_{x0}$ et $I_{y0}$ des signaux de détecteurs en l'absence du mélange;
d) mesurer les intensités respectives $I_{B1}$ et $I_{B2}$ des signaux de fond des détecteurs; et à
e) déterminer le poids de base $W_B$ de la matière de faible nombre atomique, à partir des valeurs des intensités mesurées,
caractérisé en ce que le poids de base $W_B$ est déterminé à partir de la formule

$$W_B = A + B \; I_n(R_1) + C \; I_n(R_2)$$

où: A, B et C sont des constantes

$$R_1 = \frac{I_1 - I_{B1}}{I_{x0} - I_{B1}}$$

$$R_2 = \frac{I_2 - I_{B2}}{I_{y0} - I_{B2}}$$

2. Procédé selon la revendication 1, dans lequel la première matière est constituée d'un composé.
3. Procédé selon la revendication 1, dans lequel la première matière est constituée d'un ensemble de composés.
4. Procédé selon la revendication 3, dans lequel la première matière est un mélange de phénol et d'uréeformaldéhyde.
5. Procédé selon la revendication 4, dans lequel le premier faisceau est un faisceau de rayons X et le deuxième faisceau est un faisceau de rayons gamma.

EP 0 141 751 B1

1